(19) Europäisches Patentamt / European Patent Office / Office européen des brevets

(11) **EP 3 868 464 B1**

(12) **EUROPEAN PATENT SPECIFICATION**

(45) Date of publication and mention of the grant of the patent:
**04.10.2023 Bulletin 2023/40**

(21) Application number: **21158223.4**

(22) Date of filing: **19.02.2021**

(51) International Patent Classification (IPC):
*B01J 19/00* (2006.01)   *B01J 19/18* (2006.01)
*B01J 4/00* (2006.01)

(52) Cooperative Patent Classification (CPC):
**B01J 4/002; B01F 27/621; B01F 27/70;**
**B01J 4/004; B01J 4/007; B01J 19/0066;**
**B01J 19/18;** B01J 2204/002; B01J 2219/00051;
B01J 2219/00299; B01J 2219/00779;
B01J 2219/00822; B01J 2219/00833;
B01J 2219/00889; B01J 2219/00891;   (Cont.)

(54) **REACTOR FOR PRODUCTION OF MICRONIZED SILICA GELS**

REAKTOR ZUR HERSTELLUNG VON MIKRONISIERTEN KIESELSÄUREGELEN

RÉACTEUR POUR LA PRODUCTION DE GELS DE SILICE MICRONISÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.02.2020 EP 20158738**

(43) Date of publication of application:
**25.08.2021 Bulletin 2021/34**

(73) Proprietor: **Wingflow AG**
**4153 Reinach (CH)**

(72) Inventor: **Herbst, Alexander**
**4147 Aesch (CH)**

(74) Representative: **Vossius & Partner**
**Patentanwälte Rechtsanwälte mbB**
**Siebertstrasse 3**
**81675 München (DE)**

(56) References cited:
**EP-A1- 2 486 975**   **CN-U- 204 147 868**
**CN-U- 209 049 359**   **KR-A- 20090 022 342**
**US-A- 3 751 010**   **US-A1- 2003 130 111**
**US-A1- 2009 071 895**   **US-A1- 2015 099 902**
**US-A1- 2017 153 561**

(52) Cooperative Patent Classification (CPC): (Cont.)
B01J 2219/00894

**Description**

Silica gel can generally be described as a non-precipitated, coherent, rigid, three-dimensional network of adjacent and interconnected silicon dioxide particles. Micronized silica gels can be used as adsorbents of various gases and liquids, as a stabilizing or clarifying agent in beer, wine, beverages, and edible oils, as matting agent and filler in paint and coating systems, as an abrasive in tooth paste, as a component of antifogging agents and as an anti-blocking agent in the polymer films, as a functional or strengthening filler in plastics, as adsorbent in the production of paper, plastics or textile surfaces, as a carrier material for production of catalysts, as a carrier material for active ingredients in cosmetic or pharmaceutical industry, or as anti-caking agents in the production of powdered substances.

For the production of the most commonly used powdered products based on amorphous silica, which are produced in several 100,000 tons per annum, three different types of processes are used:

1. Pyrotechnic production of silica from tetrachlorosilane $SiCl_4$, hydrogen and oxygen in an oxyhydrogen flame.

The large-scale synthesis of silica can essentially be described as continuous flame hydrolysis of silicon tetrachloride ($SiCl_4$) at a temperature of about 1200 °C (EP 097378 A1, DE 195 30 339 A1). In this case, $SiCl_4$ vaporized and then reacts spontaneously and quantitatively with the water formed intermediately within a blast gas flame to form the desired silicon dioxide. As this process is conducted within a flame, the silica produced by such processes is also referred to as fumed silica.

Under the reaction conditions in the flame high-viscosity silica particles are initially formed. Their diameter is in the range from 5 to 50 nm. The surface of these particles is smooth and not microporous. These primary particles firmly fuse in the flame into larger units - the co-called aggregates. The size of these aggregate particles is in the range from 100 to 500 nm. Upon cooling, the aggregates form tertiary structures in the form of flaky agglomerates. The size of these flaky agglomerates is in the range of 1-100 microns. Aggregates are characterized by the presence of pores, with the large accessible surface of the aggregates and agglomerates leading to a relatively high BET specific surface area (up to 600 $m^2/g$). It will be noted that total specific surface area, also referred to as BET surface area, is determined according to the method proposed by Brunauer, Emmett, and Teller (BET), also referred to as BET method.

2. Chemical precipitation of alkali silicates with acids

Large-scale precipitation processes involve partial neutralization of an alkali silicate solution, usually sodium silicate solution, from which silica is precipitated under stirring at elevated temperatures upon addition of acids (primarily sulfuric acid), whereby the formation of a gel is avoided. Low molecular weight silica colloidal particles grow to a certain size. The electrolytes released during the neutralization promote coagulation of these particles into agglomerates. The resulting agglomerate structures (coagulates) are flocculated to form aggregates and reinforced (US Pat. No. 2,819,002, EP 0272380 A2).

Amorphous precipitated silica powders usually differ from micronized silica gels in that they have a more open structure and therefore a much lower internal porosity. Under certain conditions high total pore volume can be imparted to the precipitated silica by means of targeted agglomeration into flaky tertiary structures.

3. Sol-gel conversion of alkali silicates with acids in the acidic range - silica gels.

In industrial large-scale processes, two sol-gel processes are predominantly practiced.

Silica gels can be prepared at a low pH by acidifying an aqueous solution of a soluble metal silicate, usually sodium silicate, with acid. The acidification is usually carried out by treating the silica solution with a strong mineral acid such as sulfuric acid or hydrochloric acid until reaching a pH at which the silica solution converts to a gel. The thus formed 3-dimensional gel network includes the solvent used. The silica gel is then washed free of electrolyte by a time-consuming and energy-consuming washout process. The adjustment of the pore structure is carried out subsequently by aging if necessary, a post-treatment of the hydrogel (US Pat. No. 2,759,798 . US 3501269 A).

Silica gels are also prepared by bringing an aqueous sodium silicate solution to a low pH (around 2.2) by using an ion exchanger in its protonated form, thereby obtaining silica by adding a base to achieve a pH value in the range from 4 to 8, which initiates formation of a silica gel. The resulting silica gel network is largely free of electrolytes and can be directly subjected to aging, or if necessary, to further treatment for the purpose of adjusting porosity (DD 26 15 86 A1, DD 27 92 33 A1).

Characteristic of such processes of sol-gel conversion is the relatively low colloidal stability of intermediately formed silica sols. Such a silica sol, which polycondenses uncontrollably after just a few hours, is referred to as unstable silica sol.

A disadvantage of the implementation of an unstable sol results from the thread-like silica structure, which leads to spatially hindered and therefore disordered polycondensation. The silica chains combine irregularly, the required pore structure of such a silica gel can therefore usually be adjusted only in the further treatment step.

An approach put forward more recently involves sol to gel transition, wherein a directly stabilized silica sol is used as a starting material. Sol to gel transition is initiated by setting its pH to a value in the range from 4.0 to 7.0. Change in pH value is achieved by addition of volatile acid and volatile base, that means acid and base which can be removed from the composition by evaporation. In a preferred embodiment of this process, formic acid and ammonium carbonate is used. The hardness of the thus obtained hydrogel is in the range of 20-520 N/m$^2$. Furthermore, obtained product is highly inhomogeneous and its hardness measured in different places of the same batch also differs significantly. EP2486975 A1 discloses a rapid mixing reactor for isocyanate production or aromatic polyamines which comprises a first reactant inlet with a feeding grid and a second reactant inlet having a rotation shaft with a feeding passage arranged inside it and agitator blades fixed to it with holes for delivering the second reactant into the reaction zone. This reactor aims to provide homogeneous distribution and fast mixing of the reactants to avoid side reactions and clogging of the reactor, however it is not suitable for the production of micronized silica gel. As industrially applicable silica gels should be characterized by high hardness of intermediate hydrogel and access to large amounts of the material, there is a need for improved methods for production of such micronized silica gels.

Therefore, the underlying technical problem is the provision of methods for production of a micronized silica gel characterized by hardness of their intermediate hydrogel of over 600 N/m$^2$.

The technical problem is solved by embodiments provided herein and as characterized in the claims.

Thus, in a first aspect not part of the invention relates to a method for production of a micronized silica gel, the method comprising: (a) providing a stable silica sol with a silica content in the range from 5% to 50% by weight; (b) setting pH of the stable silica sol to a value within the range of 1.7 to 4.0 using an ion exchanger in at least partly, preferably fully protonated form; (c) heating the silica sol obtained in (b); (d) adding a fluid comprising a volatile acid and a volatile base to the silica sol of (c) and mixing to achieve a uniform pH value in the entire reaction volume within less than five minutes, wherein the pH value is in the range from 4.0 to 7.0; (e) incubating the product of (d); (f) drying the product of (e); and (g) micronizing the thus obtained silica gel.

Herein, the fluid is defined preferably as either a gas or a liquid. The fluid comprising a volatile acid and/or a volatile base preferably is a volatile acid and/or a volatile base.

The term "micronized silica gel" refers to silica gel that has been micronized, that means its average particle diameter has been reduced to values of less than 1000 microns, preferably less than 500 microns, more preferably less than 100 microns. The measurement of particle size distribution was performed by dynamic light scattering. It is based on the observation that the angle of laser diffracted by a particle corresponds to the size of the particle. In a complex sample containing particles of different sizes, light diffraction results in a specific scattering pattern. By analyzing such a pattern, the exact particle size distribution of the sample can be deduced. Herein the diameter of dispersed phase particle refers to a volume median particle diameter, also referred to as $d_{50}$. Thus, unless otherwise specified, $d_{50}$ preferably refers to a volume median particle diameter, as measured by DLS. It is noted that a person skilled in the art is capable of determining a volume median particle diameter based on the results of DLS measurement.

The term "preferably" is herein used to indicate that the specified feature is not essential and may or may not be present but that additional beneficial effects may be achieved if it is present.

A colloid is a composition wherein one substance of microscopic size particles, also referred to as dispersed phase, is suspended throughout another substance, referred to as dispersion medium. The dispersed phase particles typically have a diameter in the range of 1 to 1000 nm as can be measured for example by dynamic light scattering, also referred to as DLS. Typically, colloids are characterized in that they do not settle, i.e. the dispersed phase does not get separated from the dispersion medium, or take significant amount of time to separate, typically more than 1 hour or more than 1 day. Both dispersed phase and dispersion medium can be gas, liquid, or solid, with the exception that no colloids wherein both phases are gas are known.

A sol is a colloid wherein dispersed phase is solid and the dispersion medium is liquid at 25°C and a pressure of 1 atm. In other words, a sol is made out of very small solid particles in a continuous liquid medium. The diameter of dispersed phase particles in sols is typically in range from 1 to 100 nm, as can be preferably measured by dynamic light scattering, also referred to as DLS. Herein the diameter of dispersed phase particle refers to a volume median particle diameter, also referred to as $d_{50}$. Thus, unless otherwise specified, $d_{50}$ preferably refers to a volume median particle diameter, as measured by DLS. Under certain conditions sols are characterized by high stability, that means it is possible that sols do not settle, i.e. dispersed phase does not separate from dispersion medium for at least a period of 6 months.

A silica sol is a sol wherein the dispersed phase comprises particles of silica, and the dispersing medium typically comprises water. In other words, silica sol is a colloidal system consisting of finely dispersed, discrete amorphous silica particles and a solvent. The solvent typically is an aqueous solution comprising salts and buffers.

Silica, also referred to as silicon dioxide, is an oxide of silicon according to the general chemical formula $SiO_2$. Silicon atoms in different forms of silica show tetrahedral coordination, with (substantially) each silicon atom surrounded by four oxygen atoms in the crystal lattice. Therefore, the general chemical formula of $SiO_2$ represents the stoichiometry of silica, but not its molecular structure, which is not a single molecule containing two atoms of oxygen and one atom of silicon. It is understood that silicon oxide can form large crystal networks, wherein oxygen atoms surrounding a certain silicon atom are connected to further silicon atoms, each silicon atom being surrounded by further oxygen atoms arranged in tetrahedral structure around the silicon. This ability of silica to form larger networks allows it to exist in the form of discrete particles of different size or polymer networks. It should be noted that a polymer network of silica is nonlinear, but cross-linked, as every silicon atom can serve as a branching point for the network. A polymer network of silica is thus typically a three-dimensional network in which each silicon atom is tetrahedrally surrounded by four oxygen atoms and each oxygen atom is surrounded by two silicon atoms.

According to the definition of the International Union of Pure and Applied Chemistry, a gel is a non-fluid colloidal network or polymer network that is penetrated throughout its whole volume by a fluid. In other words, gels are defined as significantly diluted cross-linked systems which exhibit no flow. The gel, wherein the fluid, also referred to as a swelling agent, is water, is referred to as a hydrogel. The gel, wherein the fluid is a gas, is referred to as a xerogel. The colloidal network or the polymer network is porous, that means in comprises spaces formed in between network structures that are filled by the fluid. Therefore, gel differs from sol in that it is a biphasic system, with a distinct solid phase comprising a colloidal or polymer network, and a distinct fluid phase comprised in the pores of the gel network, wherein solid phase is not dispersed in the fluid phase.

A silica gel is a gel wherein the solid phase is formed by silicon dioxide (silica), which forms a polymer network through formation of covalent bonds, as described above. The silica gel has a water content between 50% w/w and 95% w/w, preferably in the range between 65% w/w and 95% w/w is referred to as silica hydrogel.

Under certain conditions, a sol can be transformed into a gel. In this process, referred to as sol-gel transition, sol evolves gradually towards formation of gel network containing both a liquid phase and a solid phase. This process can also be referred to as gelling.

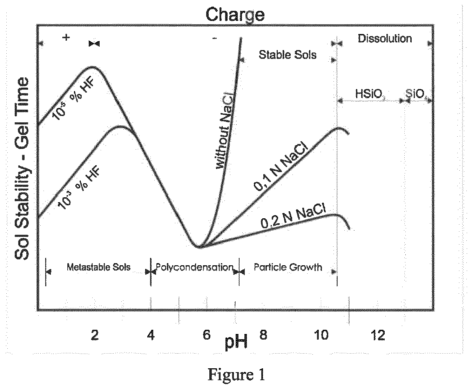

The diagram in Figure 1 (reproduced from Iler R., "The Chemistry of silica", September 1979) shows the relationship between stability of a silica sol and its pH value. A sol is considered stable when its spatial composition does not change with time, that means the particles of dispersed silica phase do not settle or separate from the aqueous medium. The stability of silica sol depends on the surface charge of the particle, which depends on the ions that are adsorbed on the surface of the sol particles. The surface charge in turn determines if there are repulsive forces between the particles, which promote the stability of silica sol. As seen in the diagram of Figure 1, the silica sol is stable under slightly basic conditions, in the pH values in the range from 7.5 to 10.7. By introducing salts like sodium chloride, or by changing conditions to acidic (pH of less than 7.0) the stability of the silica gel is significantly reduced and sol to gel transition is observed.

The definition of a value being "in the range from X to Y" is to be understood that the value may be any value equal or larger than X but at the same time equal or smaller than Y. In other words, the value must be not smaller than X and not larger than Y.

Preparation of stable silica sols is known to persons skilled in the art. In one variant of the preparation method unstable silica sol is used as a starting point. By definition unstable silica sol is a silica sol that is not stable, that means its composition may change with time, through particles of dispersed silica settling and separating from the aqueous medium, or through sol to gel transition. Unstable silica sol can be transformed into stable silica sol by changing its pH value to a value in the range from 7.5 to 10.7.

In another variant, a stable silica sol can be prepared directly starting from an aqueous solution of sodium silicate, also referred to as water glass. This process comprises addition of the silicate solution to a suspension of a weakly acidic cation exchanger of the $H^+$ form, wherein the suspension exhibits pH value in the range from 2.0 to 6.0. Under these conditions first the silicic acid is formed, which then is turned into particles of a disperse silica phase in the process comprising continuous transition to the weak alkaline pH value of the suspension, more preferably pH of the suspension in the range of 7.5 to 10.7. This production method makes it possible to obtain stable silica sols having a particularly narrow particle size distribution and high silica content. Such stable silica sol obtained directly from silicate and without forming unstable sol at any points is referred to as directly stabilized silica sol.

Directly stabilized silica sol is characterized by high silica content. Preferably, a directly stabilized silica sol contains between 5% and 50% silica. More preferably, a directly stabilized silica sol contains between 15% and 50% silica.

Ion exchanger is a material capable of binding ions and exchanging ions bound to it with another ion-containing solution or composition. Examples of materials that can be used as an ion exchanger include, but are not limited to, ion exchange polymeric resin, zeolites, montmorillonite, clay. In the typical industrial application processes, ion exchangers comprising polymeric resins are preferably used. Ion exchangers are either cation exchangers, which are understood as ion exchangers capable of exchanging cations, and anion exchangers, which are understood as ion exchangers capable of exchanging anions. Certain cation exchangers that are capable of binding $H^+$ ions, can regulate the pH value of the solution or composition by exchanging cations present in the solution or composition with $H^+$ ions bound to the $H^+$ exchanger. Preferably, ion exchanger comprising strong acid functionality is used as a $H^+$ exchanger. Strong acid functionality can be, but is not limited to, sulphonic acid group. A non-limiting example of ion exchanger that is suitable for application in the method of the present invention is Lewatit MP S 108 H.

H[+] ions referred to in this invention typically correspond to a protonated form of solvent. In the case of aqueous solutions, H[+] ions exist in the form of oxonium cations $H_3O^+$.

For the production of the silica gel according to the invention a stable silica sol is used. Preferably, a stable silica sol is a directly stabilized silica sol. One possibility of producing a silica gel is to use a stable silica sol as a starting material. A stable silica sol is a colloidal system consisting of finely dispersed, discrete amorphous $SiO_2$ particles and a solvent, which does not undergo a change in the degree of dispersion over time - there is no coagulation of colloidal particles. The colloids remain evenly distributed in the dispersion medium, there is no sinking of the particles under the action of gravity instead. The silica particles of a stable sol are preferably spherical and in most cases are characterized by a diameter $d_{50}$ in the range from 3 to about 100 nm, as measured by DLS.

It is known to that skilled in the art that if the pH value of a stable silica sol is set to a value in the range from 3.5 to 7.0 and heated to a temperature of 20 to 100 °C, it will undergo sol to gel transition, also known as a gelling process, to afford a hydrogel. However, such hydrogel is characterized by its insufficient mechanical strength, which makes its further processing extremely difficult. The hydrogel is further characterized by a hardness of under 520 N/m$^2$, as measured by a method previously disclosed in DE 102006022685B4, which leads to a lubricating effect, not favorable for further processing. Any mechanical stress to such a hydrogel leads to its transformation into paste-like mass, unsuitable for transport within the production plant, associated with the formation of the syneresis water. Syneresis water is here defined as water expelled from a gel. Low mechanical stability of the hydrogel network causes shrinkage of the network and consequently collapse of the pores of the silica gel.

It will be noted that the product of step (d), the product of gelling of a heated silica sol obtained in point (c), is also referred to as hydrogel.

It has been surprisingly found that when a volatile acid and/or a volatile base are distributed uniformly within the whole volume of silica sol in a short period of time, preferably within less than five minutes, more preferably within less than one minute, the obtained silica hydrogels are characterized by hardness in the range from 600 to 2000 N/m$^2$. Preferably, the volatile acid is an aqueous formic acid solution, and a volatile base is an aqueous ammonium hydrogen carbonate solution. Change in its pH value transforms stable silica sol into its metastable form, which can undergo spontaneous gelation to a corresponding silica hydrogel. The timescale of the gelation process has been unexpectedly found to be of the same order of magnitude as the time of diffusion of the formic acid and ammonium carbonate into the silica sol. When silica hydrogel is formed, further diffusion of acid and base, preferably formic acid and ammonium carbonate is slowed down, and gelation in further portions of the silica sol proceeds under non-optimal conditions, yielding a hydrogel of lower hardness.

As demonstrated by the Examples, immediate mixing leads to hydrogels of significantly higher hardness in comparison to a situation wherein mixing is allowed to proceed slower or wherein it is not applied and formic acid and ammonium hydrogen carbonate are merely distributed by diffusion. When comparing the product described in Reference Example 2 and Example 2, it can be seen that in the latter a product of significantly higher hardness was obtained when immediate mixing was conducted.

For a hydrogel of hardness in the range from 600 to 2000 N/m$^2$ to be formed, a means of adding and mixing the formic acid solution and ammonium carbonate solution into silica sol must be provided, wherein the mixing is faster than the gelation process. Embodiments of this invention provide a preferable means of achieving uniform pH within the whole volume of silica sol in a short time, so that gelation process can be initiated under optimal conditions at the same time in the entire volume of the silica sol.

The optimal conditions for initiating the gelation process of a silica sol are defined by a pH value of a silica sol. Preferably, the pH value of silica sol is set to a value in the range from 4.0 to 7.0 in order to initiate the gelation. More preferably, the pH value of a silica sol is set to a value in the range from 5.0 to 6.0 in order to initiate the gelation. Most preferably, the pH value of a silica sol is set to a value in the range from 5.3 to 5.7 in order to initiate the gelation.

The pH value within the entire volume of silica sol is considered to be uniform if it does not deviate throughout the volume of silica sol by more than 1.0 pH unit from a certain value, the certain value preferably being the average pH value of the entire volume of silica sol. More preferably, the pH value within the entire volume of silica sol is considered to be uniform if it does not deviate throughout the volume of silica sol by more than 0.5 pH unit from a certain value. Most preferably the pH value within the entire volume of silica sol is considered to be uniform if it does not deviate throughout the volume of silica sol by more than 0.25 pH unit from a certain value Therefore, if in a certain embodiment of this invention the pH value of the silica sol was set to the value of 5.5, and it was required to be uniform throughout the entire silica sol volume, it would mean that in every point of silica sol the pH value would be in the range from 4.5 to 6.5, more preferably it would mean that in every point of silica sol the pH value would in the range from 5.0 to 6.0, most preferably it would mean that in every point of silica sol the pH value would in the range from 5.25 to 5.75. The pH value is preferably to be measured at 25°C.

The resulting silica hydrogel network is largely free of electrolytes, and is subsequently incubated. If silica hydrogel is contaminated with electrolytes, in other words comprises electrolytes or is not free of electrolytes, these electrolytes would be washed out with water. Electrolytes are herein defined as substances that exist in form of positive and negative ions other than $H^+$ (also understood as $H_3O^+$) or $OH^-$, for example salts like sodium chloride NaCl. Volatile acid and base can be removed from the hydrogel network by converting them to gases, therefore are not considered to be electrolytes that can contaminate the silica hydrogel, as disclosed herein. It should be noted that both formic acid and ammonium hydrogen carbonate are volatile and can be converted into gases.

As used herein, the term "volatile", as in volatile acid or volatile base, preferably refers to compounds or mixtures of compounds (such as acids and/or bases) which can be evaporated at a temperature of less than 120 °C, preferably less than 105 °C, and a pressure of 1 atm by at least 95 wt.-%, preferably 99 wt.-%, most preferably 99.5 wt.-%. In this context, the term "evaporation" includes, e.g., evaporation of the compounds or mixtures of compounds (i.e. transition from liquid to gas phase), sublimation of the compounds or mixtures of compounds (i.e. transition from solid to gas phase), decomposition of the compounds or mixtures of compounds and evaporation of the decomposition products, and/or decomposition of the compounds or mixtures of compounds and sublimation of the decomposition products.

Preferably, formic acid solution and ammonium carbonate solution are used as a volatile acid and a volatile base to adjust the pH value of the silica sol to a value in the range from 4.0 to 7.0. However, this selection is not limiting and any acid and/or any base that is volatile and is suitable to adjust the pH value of the silica sol to a value in the range from 4.0 to 7.0 can be used in the method of the present invention. Accordingly, a volatile acid may be selected from the group containing an aqueous formic acid solution, pure formic acid in liquid state, pure gaseous formic acid, gaseous composition comprising formic acid, acetic acid, propionic acid, and butyric acid. A volatile base can be selected from the group containing an aqueous ammonium hydrogen carbonate solution, pure gaseous ammonia, gas compositions comprising ammonia, aqueous solution of ammonia, pure liquid or gas alkylamine, aqueous solution of alkylamine or gas compositions comprising alkylamine, N,N-dialkylamine or N,N,N-trialkylamine, wherein each alkyl group is independently methyl, ethyl, propyl or butyl.

The product of the gelling process is incubated. During the incubation time the silica hydrogel is aged. The purpose of aging is to further strengthen the structure of the hydrogel, which results in increased hardness, and to allow for adjusting the porosity of the hydrogel. The porosity is understood as the pore volume normalized by the mass of silica gel, as expressed in $cm^3/g$, which can be derived from nitrogen adsorption isotherm using the method described herein. The incubation time is preferably in the range from 1 minute to 50 hours. More preferably, the incubation time is in the range from 1 hours to 20 hours.

The thus obtained silica hydrogel comprises a significant amount of water. Depending on the silica sol used, a water content of the silica hydrogel is between 50 % w/w and 95% w/w, preferably is between 65% w/w and 95% w/w. Herein, the water content of silica gel is expressed in % w/w, which refers to the ratio of the mass of contained water to the total mass of silica gel, expressed as percentage. In order to enable industrial applications, excess water is removed in the process of drying. Any industrially applicable method of drying the silica gel can be applied in this invention. As a non-limiting example, a vacuum rotary drier can be used to dry the obtained silica hydrogel.

The final step of production of micronized silica gel is micronization. Micronization is a process of grinding a material so that the final volume median particle diameter $d_{50}$ is in the range from 1 to hundreds of microns, preferably in the range from 1 to 100 microns, as measured by DLS. The type of grinding mill to be used in the present invention is not limited and any grinding mill can be used. In certain embodiments of this invention, a whirlwind mill can be used.

The present invention relates to a method for production of a micronized silica gel, wherein the volatile acid is an aqueous formic acid solution, and wherein the volatile base is an aqueous ammonium hydrogen carbonate solution.

According to the invention, the method is performed using a reactor comprising: a reactor body with a cavity; at least one mixer rod within the cavity of the reactor body and rotatable relative to the reactor body about an axis of rotation; wherein the at least one mixer rod comprises at least one mixing extension; wherein the at least one mixer rod and/or the at least one mixing extension comprises at least one outlet opening for adding the fluid into the reactor body; and wherein the at least one outlet opening is fluidly connected to one or more fluid supply via at least one fluid connection, characterized in that the at least one mixing extension is a paddle with or without spoke, wherein the fluid supply extends through the paddle. The silica sol is provided into the cavity of the reactor body and the fluid is added into the reactor body via at least one outlet opening. The at least one mixer rod is rotated.

The reactor may have further features as described herein. Advantages associated with using a reactor as described, are described further below. For example, the reactor may provide that the fluid, e.g., volatile acid and/or base, is more homogenously, uniformly and/or rapidly added to silica sol contained in the cavity. The reactor may also form an independent aspect of the present invention and may be claimed as such, regardless of the method described herein.

Under industrial application conditions a means of adding a volatile acid and/or a volatile base, preferably formic acid aqueous solution and an ammonium hydrogen carbonate aqueous solution, to the silica sol of (c) and mixing to achieve a uniform pH value in the entire reaction volume within less than five minutes need to be provided. In certain embodiments of this invention, a reactor as described herein can be used.

In the further aspect not part of the invention relates to a method for production of a micronized silica gel, wherein the silica sol of step (c) is heated to a temperature in the range from 20°C to 100 °C.

Upon adjusting the pH of a silica sol to a value within the range from 1.7 to 4.0, a metastable silica sol is formed. The metastable silica sol is then heated to a temperature in the range from 20°C to 100 °C. As it has been previously demonstrated, gelation of a heated metastable silica sol can be initiated by adjusting its pH to a value in the range from 4.0 to 7.0. Preferably, the silica sol of step (c) is heated to a temperature in the range from 40 °C to 90 °C. More preferably, the silica sol of step (c) is heated to a temperature in the range from 50 °C to 80 °C.

Another aspect not part of the invention relates to a method for production of a micronized silica gel, wherein the formic acid is used at a concentration in the range from 0.1% to 10% w/w, preferably in the range from 0.1% to 1% w/w, most preferably in the range from 0.1% to 0.2% w/w, based on the total weight of the aqueous formic acid solution.

The concentration of formic acid in its aqueous solution is given in % calculated on a weight-to-weight basis, also referred to as w/w. For the purpose of calculating the so defined concentration of the solution, the total dissolved mass of formic acid is divided by the total weight of the aqueous solution of formic acid, and expressed as percentage (%). Preferably, formic acid is used at a concentration in the range from 0.1% to 10% w/w. More preferably, formic acid is used at a concentration in the range from 0.1% to 1% w/w. Most preferably, formic acid is used at a concentration in the range from 0.1% to 0.2% w/w.

The combination of formic acid and ammonium hydrogen carbonate is used to set the pH value of a metastable silica sol to a value within the range from 4.0 to 7.0. This invention is not limited to the use of only the combination of formic acid and ammonium hydrogen carbonate. This invention however requires that the combination of components can allow for pH value to be set to a value in the range from 4.0 to 7.0, and that all the components are volatile, that means can be fully removed by evaporation, without leaving residual electrolytes in the silica sol.

Formic acid is used to abolish the buffering action of the ammonium hydrogen carbonate used for adjusting the pH. On the other hand, formic acid is also used to support the stability of a metastable silica sol until the gelling process is initiated. Preferably, formic acid and ammonium hydrogen carbonate can be added simultaneously, or formic acid can be added first, followed by addition of ammonium hydrogen carbonate.

One further aspect not part of the invention relates to a method for production of a micronized silica gel, wherein the ammonium hydrogen carbonate is used at a concentration in the range from 1% to 21% w/w, preferably in the range from 5% to 15% w/w, most preferably in the range from 8% to 12% w/w, based on the total weight of the aqueous ammonium carbonate solution.

The concentration of ammonium hydrogen carbonate in its aqueous solution is given in % calculated on weight-to-weight basis, also referred to as w/w. For the purpose of calculating so defined concentration of the solution, the total dissolved mass of ammonium hydrogen carbonate is divided by the total weight of the aqueous solution of ammonium hydrogen carbonate and expressed as percentage (%). Preferably, ammonium hydrogen carbonate is used at a concentration in the range from 1% to 21% w/w in its aqueous solution. More preferably, ammonium hydrogen carbonate is used at a concentration in the range from 5% to 15% w/w in its aqueous solution. Most preferably, ammonium hydrogen carbonate is used at a concentration in the range from 8% to 12% w/w in its aqueous solution.

Depending on the requirements of the pore structure, three different types of treatment can be used. In certain embodiments of this invention, aging is performed under atmospheric conditions. By aging under atmospheric conditions, silica gels are obtained with a pore volume of 0.2 to 0.8 $cm^3$/g, using the method disclosed herein. In further embodiments of this invention, hydrothermal aging is performed. By means of hydrothermal aging, which can be carried out up to a water vapor pressure of 3 bar (absolute), silica gels with pore volumes of 0.7 to 1.5 $cm^3$/g are obtained. In yet further embodiments of this invention, aging by treatment with gaseous ammonia is performed. With the aid of the treatment with gaseous ammonia, pore volumes are achieved with a value of 1.0 to 2.8 $cm^3$/g, wherein by varying the ammonia pressure and the duration of treatment, the pore volume is adjusted.

Thus, another aspect not part of this invention relates to a method for production of a micronized silica gel, wherein the incubation step is performed in air. In other words, this aspect of the invention relates to a method wherein aging of silica hydrogel is performed under atmospheric conditions, in contact with air under standard pressure.

Air is understood by gas composition that makes up the atmosphere of earth. Typically, dry air comprises about 21% oxygen, about 78% nitrogen, about 1% argon and smaller amount of other gases, predominantly carbon dioxide. In addition to these components, air may contain up to 1% of water vapor. Composition of air is defined herein in volume %. Air as understood herein is not limited to recited composition. As it is known to a person skilled in the art, composition of air varies with altitude and geographical location.

Aging under atmospheric conditions is performed by exposing the produced silica hydrogel to atmospheric air under ambient pressure and ambient temperature. Ambient pressure is understood as pressure value in the range from 0.95 to 1.05 atmosphere. Ambient temperature is understood as temperature in the range from 4 °C to 36 °C, preferably in the range of 10 to 30 °C, most preferably in the range of 18 °C to 26 °C. It is to be understood that these values are not limiting. According to this aspect of the invention, the silica hydrogel is meant to be exposed to atmospheric air as it is, without further processing, for aging.

Another aspect not part of this invention relates to a method for production of a micronized silica gel, wherein the incubation step is performed in air for the time in the range from 0.1 hour to 50 hours.

Obtained silica hydrogel is typically incubated in air for the time in the range from 1 hour to 50 hours. Preferably, obtained silica hydrogel is incubated in air for the time in the range from 0.5 hour to 25 hours. More preferably, obtained silica hydrogel is incubated in air for the time in the range from 1 hours to 15 hours. Upon incubation on air under atmospheric pressure, in other words upon aging under atmospheric conditions, and subsequent drying and micronization, silica gels of a pore volume in the range from 0.2 to 0.8 cm³/g can be obtained.

Another aspect not part of this invention relates to a method for production of a micronized silica gel, wherein step (e) is performed in an inert atmosphere.

Alternatively, obtained silica gel can be incubated in an inert gas atmosphere. The inert gas atmosphere is defined as gas composition comprising more than 90% of an inert gas. The inert gases are known to the person skilled in the art and include nitrogen as well as elements of group 18 of the periodic table of elements. Preferably, in the method of the present invention, nitrogen, helium or argon are used as the inert gas.

Obtained silica gels can be incubated in air or in an inert gas atmosphere at a pressure of up to 9 bar. Preferably, obtained silica gels can be incubated in air or in an inert gas atmosphere at a pressure of up to 2 bar.

Thus, in another aspect not part of the invention relates to a method for production of a micronized silica gel, wherein step (e) is performed in air or in an inert atmosphere at a pressure of up to 9 bar.

Another aspect not part of the invention relates to a method for production of a micronized silica gel, wherein in step (e) the product of (d) is treated with steam. Steam is defined as comprising water vapor, in other words, H₂O above its boiling point under the pressure which is present. Steam may comprise up to 20% of other gases, including but not limited to components of air, like nitrogen, oxygen, carbon dioxide, argon. Preferably, steam is provided under conditions, under which water exist in its vapor form. Therefore, the steam is preferably provided at pressure of 1 bar and temperature exceeding 100 °C.

Treatment with water vapor may also be referred to as hydrothermal treatment. It is understood that under such conditions water molecules are more reactive than in liquid state. In the course of treatment, water molecules in gaseous phase fill the pores of the silica hydrogel and hydrolyze some Si-O bonds. This way, pores are expanded. In other words, pores become enlarged. This process manifests itself through an increase in porosity of the silica gel. Under treatment conditions comprising treatment with steam, in other words upon hydrothermal aging, subsequent drying and micronization, silica gels having a pore volume in the range from 0.7 to 1.5 cm³/g can be obtained.

Porosity of obtained silica gels was carried out using an adsorption device such as Nova 3200 from Quantachrome, Odelzhausen. Porosity measurements comprise determination of different parameters, including total specific pore surface area according to BET (Brunauer, Emmett and Teller), also referred to as BET surface area, volume of pores per unit of gel mass, also referred to as pore volume, and/or average size of the pores, here understood as average diameter of the pores. These parameters are determined in the course of volumetric adsorption measurements. They are carried out with gaseous nitrogen under a relative pressure ranging from $p/p_0 = 0$ to $p/p_0 = 1$ bar at 77.2 K, wherein $p$ and $p_0$, are equilibrium and saturation pressure of nitrogen at the temperature of adsorption. To this end, gaseous nitrogen is contacted with silica gel samples in the sample container. The temperature of the sample container is maintained at constant value. The amount of adsorbed nitrogen is measured when an equilibrium state between the absorbate (nitrogen in this case) and the adsorbent (porous silica gel) has formed. By means of the obtained adsorption isotherms, the pore volume, the pore diameter, and the BET surface area are determined.

The total specific surface area, also referred to as BET surface area, is determined according to the method proposed by Brunauer, Emmett, and Teller (BET), also referred to as BET method. The calculations of the BET surface area are made by linearization of the adsorption data by the BET equation, which represent the adsorbed volume as a function of relative nitrogen pressure in the range $p/p_0 = 0.05\text{-}0.3$, wherein $p$ and $p_0$, are equilibrium and saturation pressure of nitrogen at the temperature of adsorption. The BET theory assumes multilayer adsorption of a gas on the surface. According to the BET method, an adsorption isotherm can under certain conditions be plotted as a linear function of $p/p_0$ parameter, according to the formula:

$$\frac{1}{v}\frac{p/p_0}{1-p/p_0} = \frac{c-1}{v_m c}\,p/p_0 + \frac{1}{v_m c}$$

wherein $\upsilon$ is the absorbed gas quantity, $p$ and $p_0$, are equilibrium and saturation pressure of nitrogen at the temperature of adsorption, $\upsilon_m$ is monolayer-absorbed gas quantity, $c$ is the BET constant, defined according to the formula:

$$c = e^{\frac{E_1 - E_L}{RT}}$$

wherein Ei is the heat of adsorption for the first layer, and $E_L$ is that for the second and higher layers and is equal to the heat of vaporization. By plotting experimental data according to the formula, both $v_m$ and c parameters can be determined, and used to calculate BET surface area, according to the formula:

$$S_{BET} = \frac{v_m N s}{V a}$$

wherein N is Avogadro number, s is the adsorption cross section of the adsorbing species, V is the molar volume of the gas, and a is the mass of the solid sample of the adsorbent (silica gel in this case).

The pore radii are determined by the BJH method (BARRETT, JOYNER, HALENDA), which can be calculated from both adsorption and desorption isotherms by using of Kelvin equation. The Kelvin equation describes the effect of surface curvature of the liquid-vapor meniscus on the vapor pressure and relates the pore diameter with the relative pressure ($p/p_0$):

$$RT ln\,(p/p_0) = -\frac{2\gamma V_L}{r_m}$$

where p is the vapor pressure over curved liquid-vapor meniscus surface with an effective radius of rm, $V_L$ is the molar volume of the liquid absorptive, $\gamma$ is the liquid surface tension. $p_0$ is also the saturation vapor pressure as it corresponds to the vapor pressure where $r_m = \infty$, R is the universal gas constant and T is the temperature. This method is particularly suitable for mesoporous adsorbents, such as silica gels.

The total pore volume $P_V$ is determined directly from the nitrogen adsorption isotherm at a relative pressure $p/p_0$ near 1. The total adsorbed amount of gas can be converted into a liquid volume, corresponding to the total pore volume $P_V$, using the formula:

$$P_V = k \cdot V(N_2)$$

wherein k is a conversion factor 1.5468 $10^{-3}$ kg/m³ which is set for the density of liquid nitrogen of 808.6 kg/m³ and $V(N_2)$ a total adsorbed amount of nitrogen.

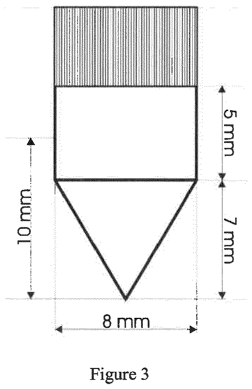

Figure 3 illustrates an object of defined geometry preferably used for measuring hardness of silica hydrogel. This method has been previously disclosed in DE102006022685B4. The hardness of hydrogel is determined using tensile testing apparatus Unimat 050 SV and a multi-measurement system PHYSIMETER ® 906 MC from Erichsen, Reiner, as reported previously. In a certain embodiment of this invention, 300 ml of a sol in a 600 ml beaker (DIN 12331, ISO 3819) are converted to a hydrogel by addition of ammonium hydrogen carbonate and formic acid. The hydrogel sample is thermostated at 70 °C. The measurement is started 30 minutes after addition of the ammonium carbonate and formic acid. The object of defined geometry with a relative feed rate of 20 mm / min is pressed into the hydrogel at the center of the beaker. The penetration depth is 10 mm. The force measurements are conducted in 1 second intervals, and the value measured at the end of measurement expressed in N/m² is taken as gel hardness.

Another aspect not part of invention relates to a method for production of a micronized silica gel, wherein the treatment with steam in step (e) is performed at an absolute pressure in the range from 1 bar to 100 bar for the time in the range from 1 hour to 50 hours.

In certain embodiment of this aspect not part of the invention, treatment with steam is performed at an absolute pressure in the range from 1 bar to 100 bar. Preferably, treatment with steam is performed at an absolute pressure in the range from 1 to 3 bar. Absolute pressure is defined as pressure referenced against perfect vacuum. The treatment with steam is performed for time in the range from 0.1 hour to 50 hours. Preferably, treatment with steam is performed for a duration in the range from 1 to 20 hours.

During treatment with steam the aging of silica network takes place. During this process water vapour is distributed equally among the pores of the silica gel and dissolves in part silica particles, which leads to increased pore sizes. Increased pore sizes can be measured as increased average pore diameter.

A further aspect not part of this invention relates to a method for production of a micronized silica gel, wherein in step (e) the product of (d) is treated with gaseous ammonia.

It is known to a person skilled in the art that a silica gel (including but not limiting to silica hydrogel) can be subjected to treatment with aqueous ammonia solution for the purpose of increasing the average diameter of the pores and total volume of the pores (DE102006022685B4). It has also been demonstrated that by fumigation of a hydrogel with gaseous ammonia, similar effect can be obtained. Therefore, it is known to persons skilled in the art that the aging process of a silica hydrogel can be performed using treatment with gaseous ammonia. Gaseous ammonia diffuses into the hydrogel and dissolves in the pore water within the silica network. Thus, upon treatment with ammonia, smaller silica particles are rearranged by repeated dissolution and precipitation to energetically more favorable sites. Consequently, the porosity of such treated silica hydrogel is changed in that the total pore volume as well as average pore diameter size are higher compared to that of silica gel from before the treatment. Furthermore, due to the high diffusion rate of gaseous ammonia in the silica hydrogel network, the aging process is considerably accelerated.

The treatment time can be optimized by varying the ammonia pressure.

The obtained silica hydrogel of step (e) can be treated with gaseous ammonia for the time in the range from 0.1 hour to 50 hours. Preferably, obtained silica hydrogel can be treated with gaseous ammonia for a duration in the range from 1 hour to 20 hours. Obtained silica hydrogel can be treated with gaseous ammonia at an absolute pressure in the range from 1 bar to 100 bar. Preferably, the obtained silica hydrogel of step (e) can be treated with gaseous ammonia at a pressure in the range from 1 bar to 10 bar.

Therefore, another aspect not part of the invention relates to a method for production of a micronized silica gel, wherein the treatment with gaseous ammonia is performed at an absolute pressure in the range from 1 bar to 100 bar for a duration in the range from 0.1 hour to 50 hours.

A further aspect not part of the invention relates to a method for production of a micronized silica gel, wherein the treatment with gaseous ammonia is performed at an absolute pressure in the range from 1 bar to 10 bar for the time in the range from 1 hour to 20 hours.

The silica hydrogel obtained by the gelling process in step (e) typically has high water content. Silica hydrogel comprises mostly water and becomes useful for industrial applications only upon drying, wherein excess water is removed. Drying affords silica gel from silica hydrogel. Any industrially applicable method of drying the silica gel can be applied in this invention. Herein, the water content of silica gel is expressed in % w/w, which refers to the ratio of the mass of contained water to the total mass of silica gel, expressed as percentage. The final product micronized silica gel has a water content in the range from 1% to 65% w/w. Preferably, water content of the produced silica gel is in the range from 1% to 20% w/w. More preferably, the produced silica gel has a water content in the range from 1% to 8% w/w.

Therefore, another aspect not part of the invention relates to a method of producing a micronized silica gel, wherein the produced silica gel has a water content in the range from 1% to 65% w/w.

Dried silica gel is micronized in the final step of the method of present invention using a grinding mill.

The type of grinding mill is not limiting for this invention and any type of grinding mill can be used. In certain embodiments of this invention, a whirlwind mill can be used. Upon micronization, volume median particle diameter $d_{50}$ of 1 to 100 microns is achieved. More preferably, upon micronization average particle diameter of 1 to 20 microns is achieved. Preferably, the processes of drying and grinding (micronization) of obtained silica hydrogel are combined and executed using a single apparatus. In other words, silica hydrogel upon incubation is subjected to simultaneous drying and micronization in a drying-grinding mill There are several advantages of such solution. As smaller particles are subjected to drying process, their accessible surface becomes larger as the grinding progresses and as a result drying process is faster. At the same time, more efficient grinding is provided for the silica gel that has been deprived in part of its water content.

Therefore, another aspect not part of the invention relates to a method of producing a micronized silica gel, wherein steps (f) and (g) are conducted simultaneously.

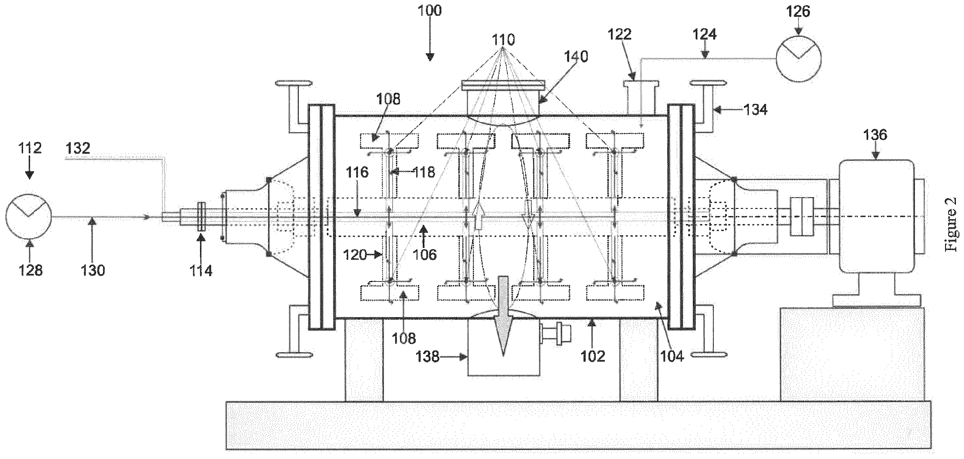

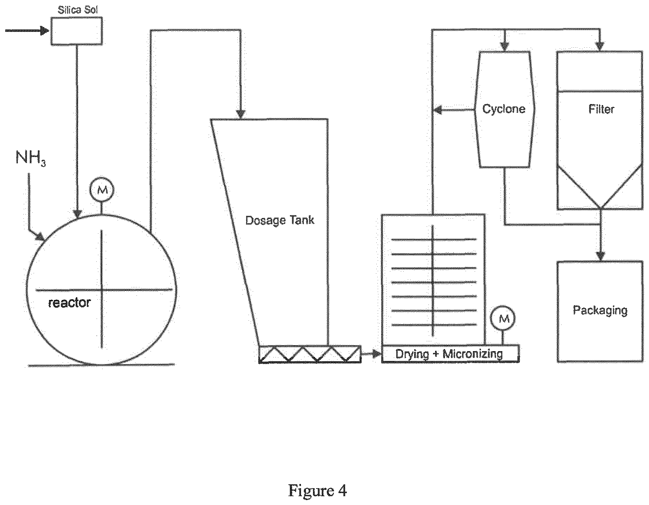

Figure 4 presents an example embodiment of machinery useful for executing the method, the machinery including drying and grinding setup. In this embodiment, the silica sol is transformed into silica hydrogel and incubated within the reactor (discussed in more detail in Figure 2). Once aging of the hydrogel is complete, hydrogel is transferred into dosage tank, wherefrom it is fed into drying-grinding mill for simultaneous drying and micronization.

Silica gels prepared according to the method of this invention can be ground so that the desired particle diameter is obtained. Dried silica gels are ground, or in other words micronized, so that the average obtained particle size is in the range from 1 micron to 100 microns. Preferably, silica gels produced have a mean particle diameter in the range from 1 micron to 12 microns.

Thus, another aspect not part of the invention relates to a method of producing a micronized silica gel, wherein the silica gel having a mean particle diameter in the range from 1 micron to 100 microns is formed.

The method disclosed herein allows for production of silica gels characterized by high hardness. Previously reported methods for the production of micronized silica gels, which employ sol to gel transition, also known as sol-to-gel processes, failed to produce silica gels of hardness of 600 N/m$^2$. It will be noted that hardness defined herein is measured using tensile testing apparatus Unimat 050 SV and a multi-measurement system PHYSIMETER ® 906 MC from Erichsen, Reiner, as reported previously. It will be noted that hardness of silica hydrogel, before subjecting the said silica hydrogel to drying and micronizing steps, is measured. The method according to present invention allows for silica hydrogels of hardness in the range from 600 to 2000 N/m$^2$ to be produced. Preferrably, the method of this invention allows for silica hydrogels of hardness in the range from 600 to 1200 N/m$^2$ to be produced.

Thus, a particular aspect not part of the invention relates to a method for production of a micronized silica gel, wherein the hardness of the product of (e) is in the range from 600 to 2000 N/m$^2$.

Another particular aspect not part of the invention relates to a method for production of a micronized silica gel, wherein the silica gel is characterized by an average pore radius of 1 to 100 nm.

A further particular aspect not part of the invention relates to a method for production of a micronized silica gel, wherein the silica gel is characterized by a pore volume of 0.2 - 2.8 cm$^3$/g.

Another particular aspect not part of the invention relates to a method for production of a micronized silica gel, wherein the silica gel is characterized by a BET surface area of 20 to 1200 m$^2$/g.

A further aspect not part of the invention relates to a micronized silica gel obtained according to the method disclosed herein.

A further underlying technical problem relates to the provision of a reactor that is optimized for the production of micronized silica gel having hardness in the range from 600 to 2000 N/m$^2$.

According to the invention, said technical problem is solved by providing a reactor that is able to rapidly and/or homogenously and/or uniformly add a fluid comprising a volatile acid and/or base to a substance (preferably a silica sol) contained in a reactor cavity. The term "rapidly" may refer to a time scale of 5 minutes or less, preferably of 1 minute or less.

A further aspect of the invention relates to a reactor, preferably a reactor for production of a micronized silica gel. The reactor comprises a reactor body with a cavity, and at least one mixer rod within the cavity of the reactor body and rotatable relative to the reactor body about an axis of rotation. The at least one mixer rod comprises at least one mixing extension. The at least one mixer rod and/or the at least one mixing extension comprises at least one outlet opening for adding a fluid into the reactor body. The at least one outlet opening is fluidly connected to one or more fluid supply via at least one fluid connection.

The reactor is configured for producing micronized silica gel or an intermediate product for the production of micronized silica gel from silica sol.

The term "reactor" hereby refers to a device which is adapted to contain a biological, chemical and/or physical reaction. The reactor comprises a reactor body with a cavity. The reactor body may substantially enclose the cavity. That is, the reactor body may contain one or more openings, through which substances may be added into or discharged from the cavity and/or through which a person may enter into the cavity, e.g. for servicing the reactor.

The mixer rod may also be referred to as axis or spindle. It is configured to rotate about an axis of rotation. Preferably, the mixer rod extends along the axis of rotation. The term "mixing extension" refers to a structure that extends from the mixer rod. For example, the mixing extensions may extend radially from the mixer rod and/or perpendicularly to the mixing rod and/or the rotation axis. When the mixing rod is rotated, the at least one mixing extension rotates with the mixing rod about the rotation axis. The mixing extension is preferably configured to homogenously and/or uniformly mix the substances, e.g. silica sol, contained in the reactor body's cavity when the at least one mixing rod and the at least one mixing extension are rotated.

The at least one outlet opening may refer to an opening provided on a surface of the at least one mixing rod and/or the at least one mixing extension. The term "fluid connection" may refer to a fluid line or channel, which may, e.g., be provided in the at least one mixing rod and/or the at least one mixing extension and which connects the at least outlet opening with the at least one fluid supply. The fluid connection may comprise more than one fluid lines or channels.

For example, the fluid supply may comprise a central channel within the at least one mixing rod, which central channel extends along the rotation axis, and further channels branching of from said central channel. These further channels may branch of to the surface of the at least one mixer rod and/or to the surface of at least one mixing extension.

Preferably, each of the at least one mixing extensions comprises at least one outlet opening, preferably at least 2, at least 3, or at least 4 outlet openings.

The fluid connection may extend from outside the reactor cavity to the at least one outlet opening provided on the at least one mixer rod and/or the at least one mixing extension in the reactor cavity.

The fluid supply may include a pump configured to inject the fluid, e.g., a volatile acid and/or base, through the fluid connection to the at least one outlet openings and into the cavity of the reactor body. The fluid supply may be located outside the reactor cavity.

It has unexpectedly and surprisingly been found that the reactor has a structure that is similar to the structure of a paddle dryer or paddle mixer. However, in contrast to a paddle dryer or paddle mixer, the at least one mixer rod and/or the at least one mixing extension of the reactor comprises at least one outlet opening as described herein. By providing the at least one outlet opening on the at least one mixer rod and/or the at least one mixer extension, the fluid, e.g., volatile acid and/or base, may be homogenously, uniformly and/or rapidly added to silica sol contained in the cavity.

According to a further aspect of the invention the fluid connection extends through a channel that extends through the mixing rod, preferably along a longitudinal axis of the mixing rod, and, if the at least one outlet opening is in the mixing extension, through the mixing extension.

In this way, it is not necessary to place additional fluid lines along the mixer rod and/or the mixing extension. Moreover, this solution also enables to guide the fluid connection from outside the cavity into the cavity without having to provide a separate line through the reactor body from the outside of the cavity into the cavity.

According to a further aspect, the at least one mixer rod comprises at least one mixing extension per rod preferably at least 2 and maximal 40, more preferably between 4 and 24.

In this way, an improved, e.g., more homogenous and/or uniform, mixing of the substance, e.g., silica sol, in the reactor body's cavity may be obtained.

According to a further aspect of the invention, the reactor body has a volume of at least 50 L, preferably at least 500 L, more preferably at least 1000 L.

According to a further aspect of the invention,

the at least one mixing extension has a length of at least 0.1 m, preferably at least 0.5 m.

In this way, an improved, e.g., more homogenous and/or uniform, mixing of the substance, e.g., silica sol, in the reactor body's cavity may be obtained.

According to a further aspect of the invention the channel has a cross-sectional area of at least 3mm$^2$, preferably at least 20mm$^2$, more preferably 50mm$^2$.

The cross-sectional area may refer to an area of a cross-section that is perpendicular to the extension of the channel. Preferably, the channel has such a cross-sectional area at least along 90% of the entire length of the channel, preferably along the entire length of the channel.

In this way, it may be ensured that the required amount of fluid may be added into the reactor body's cavity within 5 minutes or less, preferably within 1 minute or less.

According to the invention, the at least one mixing extension is paddle with or without spoke, wherein the fluid supply extends through the paddle.

In this way, an improved, e.g., more homogenous and/or uniform, mixing of the substance, e.g., silica sol, in the reactor body's cavity may be obtained.

According to a further aspect of the invention, the reactor body has an inlet for inserting material into the reactor body.

For example, the insert may be configured for inserting solid material, e.g., silica sol, into the reactor body and/or the cavity. Moreover, the reactor body may comprise an inlet for adding a fluid into the cavity.

Preferably the reactor body comprises an outlet for discharging the micronized silica sol or an intermediate product for the production of micronized silica sol.

According to a further aspect of the invention, the reactor has a unit for setting a temperature within the cavity of the reactor body or a temperature of a material provided within the cavity of the reactor body. Preferably, the unit is a steam heating system that is configured to inject steam into the cavity of the reactor body.

Preferably the unit is configured to set a temperature of the material provided within the cavity, e.g., silica sol, to a predetermined temperature between 20°C and 100°C, preferably from 40°C to 90°C, even more preferably from 50°C to 80°C.

In this way, the reactor is configured to incite a sol to gel transition of the silica sol.

According to a further aspect of the invention the at least one outlet comprises a nozzle.

In this way, the fluid may more homogenously and/or uniformly be added and/or injected into the reactor body's cavity. Thus, the fluid may be more homogenously and/or uniformly be added to the silica sol within the cavity.

According to a further aspect of the invention, the fluid connection comprises at least one active or passive valve to control flow, prevent back flow and/or shut the openings.

In this way, the supply of fluid through the fluid connection and into the reactor body's cavity may be effectively controlled, which allows to effectively control the reaction within the reactor body.

According to a further aspect of the invention, the reactor body and/or the at least one mixer rod are made from non-reactive material, preferably metal, even more preferably stainless steel. In addition or alternatively, the reactor is insidely coated with a non-reactive material, preferably rubber, plastics, enamel or composites thereof, e.g., the inside surface of the reactor body and/or the mixer rod and/or the mixing extension is/are coated as described.

In this way, negative effects, e.g., of the fluid, i.e., volatile acid and/or base, on the reactor body may be reduced or even completely prevented.

According to a further aspect of the invention, the reactor comprises a drive unit for rotating the at least one mixer rod. Preferably, the drive unit is configured to rotate the at least one mixer rod with 1-200 rpm, more preferably with 1-120 rpm, even more preferably with 1-60 rpm.

In this way, it may be provided that the fluid, i.e. volatile acid and/or base can be homogenously and/or uniformly added to the silica sol within a short period of time, preferably within 5 minutes or less, more preferably within 1 minute or less.

According to a further aspect of the invention, the fluid is a volatile acid and/or a volatile base, preferably an aqueous formic acid solution and/or an aqueous ammonium hydrogen carbonate solution.

A further aspect of the invention relates to a use of a reactor as described herein for producing a silica gel.

A further aspect of the invention relates to a method for production of a micronized silica gel with the reactor described herein, the method comprising the steps:

(a) providing a silica sol into the cavity of the reactor body;
(b) rotating the at least one mixer rod relative to the reactor body;
(c) injecting a fluid, preferably a volatile acid and/or volatile base, more preferably an aqueous formic acid solution and/or an aqueous ammonium hydrogen carbonate solution, into the cavity of the reactor body.

Steps (c) and (b) are performed at least partly simultaneously.

In other words, at least an extent of steps (c) and (b) are performed at the same time.

According to a further aspect of the invention, the reactor comprises a unit as described herein and the method further comprises the step: (d) setting a temperature of the silica sol within the cavity of the reactor to a temperature in the range from 20°C to 100°C, preferably from 40°C to 90°C, even more preferably from 50°C to 80°C. Step (d) is performed after step (a) and prior to step (c).

According to a further aspect of the invention, between 1% and 50% per weight of the fluid are added into the cavity within 5 minutes or less, preferably within 1 minute or less. In addition or alternatively, the mixer rod is rotated while a total amount of the fluid is added into the cavity.

In other words, the mixer rod is rotated during most of or during the entire time period in which the fluid is added into the cavity.

Brief description of Figures.

Figure 1 represents the correlation between pH of silica sol and its stability, as well as gelling time.
Figure 2 show a reactor according to an exemplary embodiment of the invention.
Figure 3 shows an object used in the measurement of silica hydrogel hardness.
Figure 4 presents a setup for the method of producing a micronized silica gel involving simultaneous drying and micronization of the silica gel.

The following examples are merely illustrative and not part of the invention which is defined by the appended claims.

EXAMPLES

Example 1

300 mL of silica sol with a $d_{50}$ of 5 nm and silica content of 15% and pH value of 9.2 was set to a pH value of 2.0 by using the protonated form of a Lewatit MP S 108 H, a strongly acidic cation exchange resin. pH value was determined using a pH meter. The silica sol was then warmed up to 70 °C. Subsequent addition of 0.3 mL of 0.1% w/w aqueous solution of formic acid and 12.0 mL of 10% w/w aqueous solution of ammonium hydrogen carbonate with immediate mixing within less than a minute led to setting the pH value of the silica sol to a value of 5.5 and initiation of rapid gelling process. The hardness of obtained silica hydrogel was measured to be 978.23 N/m². Obtained silica gel was then split in several samples and different aging protocols were applied.

One portion of the thus obtained silica hydrogel was incubated for three hours under atmospheric conditions, then it was dried to 3% residual water content and micronized to an average particle diameter of 4 microns. The porosity of the obtained silica gel was assessed. The total pore volume was 0.95 cm³/g, the average pore radius was measured as 5.0 nm, and BET specific surface area was equal to 625 m²/g.

Another portion of the thus obtained silica hydrogel was aged under hydrothermal conditions. The silica hydrogel was incubated for 3 hours under with steam under a pressure of 1.5 bar, then it was dried to 3% residual water content and micronized to an average particle diameter of 4 microns. The porosity of obtained silica gel was assessed. The total pore volume was 1.55 cm³/g, the average pore radius was measured as 6.0 nm, and BET specific surface area was equal to 415 m²/g.

Another portion of the thus obtained silica hydrogel was treated with gaseous ammonia under a pressure of 5 bar for a duration of 10 hours. The hydrogel was then dried to a residual water content of 2 % and micronized to the average particle diameter of 8 microns. The porosity of obtained silica gel was assessed. The total pore volume was 2.75 cm³/g, the average pore radius was measured as 14.4 nm, and BET specific surface area was equal to 341 m²/g.

Example 2

300 mL of silica sol with a $d_{50}$ of 6 nm and silica content of 22% and pH value of 9.3 was set to a pH value of 1.8 by using the protonated form of a Lewatit MP S 108 H, a strongly acidic cation exchange resin. pH value was determined using a pH meter. The silica sol was then warmed up to 70 °C. Subsequent addition of 0.3 mL of 0.1% w/w aqueous solution of formic acid and 12.5 mL of 10% w/w aqueous solution of ammonium hydrogen carbonate with immediate mixing within less than a minute led to a pH value of the silica sol of 5.5 and initiation of rapid gelling process. The hardness of obtained silica hydrogel was measured to be 815.11 N/m².

The thus obtained silica hydrogel was treated with gaseous ammonia under pressure of 2 bar for a duration of 10 hours. The hydrogel was then dried to a residual water content of 2 % and micronized to obtain an average particle diameter of 8 microns. The porosity of the thus obtained silica gel was assessed. The total pore volume was 1.85 cm³/g, the average pore radius was measured as 16.5 nm, and BET specific surface area was equal to 295 m²/g.

Reference Example 2

300 mL of a silica sol with a $d_{50}$ of 6 run and a silica content of 22% and a pH value of 9.3 is set to a pH value of 1.8 by using the protonated fonn of a Lewatit MP S 108 H, a strongly acidic cation exchange resin. pH value was determined using a pH meter. The silica sol was then warmed up to 70 °C. Subsequent addition of 0.3 mL of 0.1% w/w aqueous solution of formic acid and 12.5 mL of 10% w/w aqueous solution of ammonium hydrogen carbonate led to a pH value of the silica sol of 5.5 and initiation of gelling process. The hardness of obtained silica hydrogel has been measured to be 476.29 N/m².

Example 3

300 mL of a silica sol with a $d_{50}$ of 7 nm and a silica content of 30% and a pH value of 9.0 is set to a pH value of 2.4 by using the protonated form of a Lewatit MP S 108 H, a strongly acidic cation exchange resin. pH value was determined using a pH meter. The silica sol was then warmed up to 70 ° C. Subsequent addition of 0.3 mL of 0.1% w/w aqueous solution of formic acid and 10.5 mL of 10% w/w aqueous solution of ammonium hydrogen carbonate with immediate mixing within less than a minute led to a pH value of the silica sol of 5.5 and initiation of rapid gelling process. The hardness of the obtained silica hydrogel was measured to be 722.24 $N/m^2$. The obtained silica gel was then split in several samples and different aging protocols were applied.

One portion of the thus obtained silica hydrogel was incubated for three hours under in contact with air at the pressure of 1 atm and temperature of 25 °C, then dried to 10% residual water content and micronized to an average particle diameter of 15 microns. The porosity of the obtained silica gel was assessed. The total pore volume was 0.75 $cm^3/g$, the average pore radius was measured as 7.0 nm, and BET specific surface area was equal to 445 $m^2/g$.

Another portion of the thus obtained silica hydrogel was aged under hydrothermal conditions, i.e. the silica hydrogel was incubated for 3 hours in steam under a pressure of 1.5 bar, then it was dried to 10% water content and micronized to an average particle diameter of 15 microns. The porosity of the obtained silica gel was assessed. The total pore volume was 1.35 $cm^3/g$, the average pore radius was measured as 9.0 nm, and BET specific surface area was equal to 326 $m^2/g$.

Another portion of the thus obtained silica hydrogel was treated with gaseous ammonia under pressure of 2 bar for a duration of 3 hours. The hydrogel was then dried to a residual water content of 10 % and micronized to an average particle diameter of 15 microns. The porosity of the obtained silica gel was assessed. The total pore volume was 2.05 $cm^3/g$, the average pore radius was measured as 14.0 micrometer, and BET specific surface area was equal to 295 m2/g.

Example 4

300 mL of silica sol with a $d_{50}$ of 15 nm and a silica content of 40% and pH value of 9.0 is set to a pH value of 1.7 by using the protonated form of a Lewatit MP S 108 H, a strongly acidic cation exchange resin. pH value was determined using a pH meter. Silica sol was then warmed up to 70 °C. The subsequent addition of 0.32 mL of 0.1% w/w aqueous solution of formic acid and 12.0 mL of 10% w/w aqueous solution of ammonium hydrogen carbonate with immediate mixing within less than a minute led to a pH value of the silica sol of 5.5 and initiation of rapid gelling process. The hardness of obtained silica hydrogel was measured to be 682.31 $N/m^2$. The obtained silica gel was then split in several samples and different aging protocols were applied.

One portion of the thus obtained silica hydrogel was incubated for three hours in contact with air at the pressure of 1 atm and temperature of 25 °C, then it was dried to 3% residual water content and micronized to an average particle diameter of 4 microns. The porosity of obtained silica gel was assessed. The total pore volume was 0.65 $cm^3/g$, the average pore radius was measured as 6.0 nm, and BET specific surface area was equal to 188 $m^2/g$.

Another portion of the thus obtained silica hydrogel was aged under hydrothermal conditions. Silica hydrogel was incubated for 3 hours under the steam pressure of 1.5 bar, then it was dried to 3% residual water content and micronized to an average particle diameter of 4 microns. The porosity of obtained silica gel was assessed. The total pore volume was 0.95 $cm^3/g$, the average pore radius was measured as 10.0 nm, and BET specific surface area was equal to 185 $m^2/g$.

Another portion of the thus obtained silica hydrogel was treated with gaseous ammonia under pressure of 2 bar for the time of 3 hours. Then the hydrogel was dried to a residual water content of 10 % and micronized to the average particle diameter of 15 microns. The porosity of obtained silica gel was assessed. The total pore volume was 1.07 $cm^3/g$, the average pore radius was measured as 20.0 nm, and BET specific surface area was equal to 121 $m^2/g$.

Example 5

300 mL of silica sol with a $d_{50}$ of 35 nm and silica content of 50% and pH value of 9.2 is set to a pH value of 2.0 by using the protonated form of Lewatit MP S 108 H, a strongly acidic cation exchange resin. pH value was determined using a pH meter. Silica sol was then warmed up to 70 degrees C. Subsequent addition of 0.3 mL of 0.1% w/w aqueous solution of formic acid and 12.0 mL of 10% w/w aqueous solution of ammonium hydrogen carbonate with immediate mixing within less than a minute has led to setting the pH value of the silica sol to the value of 5.5 and initiation of rapid gelling process. The hardness of obtained silica hydrogel was measured to be 607.92 $N/m^2$. Obtained silica gel was then split in several samples and different aging protocols were applied.

One portion of the thus obtained silica hydrogel was incubated for three hours in contact with air at the pressure of 1 atm and temperature of 25 °C, then it was dried to 3% residual water content and micronized to an average particle diameter of 15 microns. The porosity of obtained silica gel was assessed. The total pore volume was 0.25 $cm^3/g$, the average pore radius was measured as 35.0 nm, and BET specific surface area was equal to 129 $m^2/g$.

Another portion of so obtained silica hydrogel was aged under hydrothermal conditions. Silica hydrogel was incubated for 3 hours under the steam pressure of 1.5 bar, then it was dried to 10% water content and micronized to an average particle diameter of 15 microns. The porosity of obtained silica gel was assessed. The total pore volume was 0.44 $cm^3/g$, the average pore radius was measured as 43.0 nm, and BET specific surface area was equal to 85 m$^2$/g.

Another portion of the thus obtained silica hydrogel was treated with gaseous ammonia under pressure of 2 bar for the time of 3 hours. Then the hydrogel was dried to a residual water content of 10 % and micronized to the average particle diameter of 8 microns. The porosity of obtained silica gel was assessed. The total pore volume was 0.59 cm$^3$/g, the average pore radius was measured as 55.0 nm, and BET specific surface area was equal to 29 m$^2$/g.

Example 6

1500 L of silica sol with a d$_{50}$ of 5 nm and silica content of 15% and pH value of 9.1 is set to a pH value of 2.0 by using the protonated form of Lewatit MP S 108 H, a strongly acidic cation exchange resin. Silica sol is then warmed up to 70 °C. Subsequent addition of 1.5 L of 0.1% w/w aqueous solution of formic acid and 58.5 L of 10% w/w aqueous solution of ammonium hydrogen carbonate with immediate mixing within less than a minute leads to setting the pH value of the silica sol to the value of 5.6 and initiation of rapid gelling process. The hardness of obtained silica hydrogel is measured to be 908.22 N/m$^2$. Obtained silica gel is then split in several samples and different aging protocols were applied.

One portion of the thus obtained silica hydrogel is incubated for three hours under atmospheric conditions, then it is dried to 3% residual water content and micronized to an average particle diameter of 4 microns. The porosity of obtained silica gel is assessed. The total pore volume is 0.90 cm$^3$/g, the average pore radius is measured as 5.0 nm, and BET specific surface area is equal to 598 m$^2$/g.

Another portion of the thus obtained silica hydrogel is aged under hydrothermal conditions. Silica hydrogel is incubated for 3 hours under the steam pressure of 1.5 bar, then it is dried to 3% residual water content and micronized to an average particle diameter of 4 microns. The porosity of obtained silica gel is assessed. The total pore volume is 1.47 cm$^3$/g, the average pore radius is measured as 6.0 nm, and BET specific surface area is equal to 396 m$^2$/g.

Another portion of the thus obtained silica hydrogel is treated with gaseous ammonia under pressure of 5 bar for the time of 10 hours. Then the hydrogel is dried to a residual water content of 2 % and micronized to the average particle diameter of 8 microns. The porosity of obtained silica gel is assessed. The total pore volume is 2.69 cm$^3$/g, the average pore radius is measured as 15.4 nm, and BET specific surface area is equal to 322 m$^2$/g.

Figure 2 shows a reactor 100 according to an exemplary embodiment of the invention. The reactor comprises a reactor body 102 having a substantially cylindrical shape about a reactor body axis. The reactor body 102 substantially encloses a reactor cavity 104. The reactor cavity 104 is configured for receiving, e.g., silica sol. The reactor cavity 104 may have a volume of at least 50 L, more preferably at least 500 L, even more preferably at least 1000 L.

The reactor 100 further comprises a mixer rod 106 having at least one, e.g., 8, mixing extensions 108 extending from the mixer rod 106. The mixer rod 106 is rotatable about a rotation axis, which, in the present exemplary embodiment, is collinear to the reactor body axis. In the current exemplary embodiment, the mixing extensions 108 extend perpendicularly from the rotation axis and are formed as paddles comprising spokes 120. The mixing extension 108 has a length of at least 0.1 m, more preferably at least 0.5 m.

The reactor body 102 and/or the at least one mixer rod and/or the at least one mixing extension are made from non-reactive material, preferably metal, even more preferably stainless steel. Alternatively or additionally, the reactor 100, e.g. the inside surface of reactor body 102 and/or the mixer rod 106 and/or the mixing extension 108, is/are coated with a non-reactive material, preferably rubber, plastics, enamel or composites thereof.

In the present exemplary embodiment, each one of the mixing extensions 108 comprises at least one outlet opening 110 fluidly connected to a fluid supply 112 via a fluid connection 114. Preferably, each outlet opening 110 comprises a nozzle. However, as disclosed herein, the outlet openings may also be provided in the mixer rod 106. The fluid supply 112 comprises a pump 128 for supplying fluid, e.g. volatile acid and/or base, into the fluid supply 114. The fluid connection 114 comprises a central channel 116 within the mixer rod 106. For each mixing extension 108, a further channel 118 branches off from the central channel 116.

The fluid connection 114 may further comprise a supply line 130 connecting the central channel 116 with the pump 128. Moreover, the fluid connection 114 may comprise further supply lines 132 for supplying fluids other than the fluids supplied by pump 128 to the outlet openings 110. For example, the pump 128 may supply ammonium bicarbonate and/or formic acid, wherein supply line 132 may supply ammonia. In addition or alternatively, the reactor body 102 may comprise at least one opening for supplying fluid into the cavity. The central channel 116 and/or the further channel 118 may have a cross-sectional area of at least 3mm$^2$, more preferably at least 20mm$^2$, even more preferably 50mm$^2$.

Preferably, the fluid connection 114 comprises at least one active or passive valve to control flow, prevent back flow and/or shut the openings.

Furthermore, the reactor body 102 comprises an inlet 122 for inserting, e.g., silica sol into the cavity 104. The inlet 122 is connected to a supply line 124 and a pump 126 for supplying, e.g., silica sol to the inlet 122 and into the cavity 104. The reactor body 102 also comprises an outlet 138 for discharging the micronized silica gel or an intermediate product for the production of micronized silica gel. The outlet 138 may comprise a butterfly valve, which may be pneumatically controlled, in order to control discharge.

The reactor 100 further comprises a drive unit 136 configured to rotate the mixer rod 106 and mixing extensions 108 about the rotation axis. The drive unit may be configured to to rotate the at least one mixer rod with 1-200 rpm, more preferably with 1-120 rpm, even more preferably with 1-60 rpm.

Furthermore, the reactor 100 comprises a heating unit 134 for setting a temperature within the cavity 104 of the reactor body 102 and/or a temperature of material, e.g., silica sol, within the cavity 104. Preferably, the heating unit 134 is a steam heating system comprising a steam supply and a steam inlet 134 in the reactor body.

The reactor body 102 further comprises a manhole 140 for allowing a person to enter the reactor body, e.g., for servicing.

**Claims**

1. A reactor (100) for production of a micronized silica gel, the reactor comprising:

   a reactor body (102) with a cavity (104);
   at least one mixer rod (106) within the cavity of the reactor body and rotatable relative to the reactor body about an axis of rotation;
   wherein the at least one mixer rod comprises at least one mixing extension (108);
   wherein the at least one mixer rod and/or the at least one mixing extension comprises at least one outlet opening (110) for adding a fluid into the reactor body;
   wherein the at least one outlet opening is fluidly connected to one or more fluid supply (112) via at least one fluid connection (114),
   **characterized in that** the at least one mixing extension is a paddle (108) with or without spoke (120), wherein the fluid supply extends through the paddle.

2. The reactor of claim 1,
   wherein the fluid connection extends through a channel (116, 118) that extends through the mixing rod, preferably along a longitudinal axis of the mixing rod, and, if the at least one outlet opening is in the mixing extension, through the mixing extension.

3. The reactor of claim 1 or 2,
   wherein the at least one mixer rod comprises at least one mixing extension per rod, preferably between 2 and 40, more preferably between 4 and 24.

4. The reactor of any one of the preceding claims,

   wherein the reactor cavity has a volume of at least 50 L, preferably at least 500 L, more preferably at least 1000 L,
   and/or
   wherein the at least one mixing extension has a length of at least 0.1 m, preferably at least 0.5 m.

5. The reactor of any one of the preceding claims when dependent on claim 2, wherein the channel has a cross-sectional area of at least 3mm$^2$, preferably at least 20mm$^2$, more preferably 50mm$^2$.

6. The reactor of any one of the preceding claims, wherein the reactor body has an inlet (122) for inserting material into the reactor body.

7. The reactor of any one of the preceding claims, wherein the reactor has a unit (134) for setting a temperature within the cavity of the reactor body or a temperature of a material provided within the cavity of the reactor body;
   wherein, preferably, the unit is a steam heating system that is configured to inject steam into the cavity of the reactor body.

8. The reactor of any one of the preceding claims, wherein the at least one outlet comprises a nozzle, and/or
   wherein the fluid connection comprises at least one active or passive valve to control flow, prevent back flow and/or shut the openings.

9. The reactor of any one of the preceding claims, wherein the reactor body and/or the at least one mixer rod and/or the at least one mixing extension are made from non-reactive material, preferably metal, even more preferably stainless steel;
   and/or
   wherein the reactor is insidely coated with a non-reactive material, preferably rubber, plastics, enamel or composites thereof.

10. The reactor of any one of the preceding claims, further comprising a drive unit (136) for rotating the at least one mixer rod;
    wherein, preferably, the drive unit is configured to rotate the at least one mixer rod with 1-200 rpm, more preferably with 1-120 rpm, even more preferably with 1-60 rpm.

11. Use of a reactor according to any one of the preceding claims for producing a micronized silica gel.

12. Method for production of a micronized silica gel with the reactor of any one of claims 1 to 10, the method comprising the steps:

    (a) providing a silica sol into the cavity of the reactor body;

(b) rotating the at least one mixer rod relative to the reactor body;

(c) injecting a fluid, preferably a volatile acid and/or volatile base, more preferably an aqueous formic acid solution and/or an aqueous ammonium hydrogen carbonate solution, into the cavity of the reactor body;

wherein steps (c) and (b) are performed at least partly simultaneously.

13. Method according to claim 12,

wherein the reactor comprises a unit according to claim 8;
wherein the method further comprises the step:
(d) setting a temperature of the silica sol within the cavity of the reactor to a temperature in the range from 20°C to 100°C, preferably from 40°C to 90°C, even more preferably from 50°C to 80°C;
wherein step (d) is performed after step (a) and prior to step (c),
preferably wherein between 1% and 50% per weight of the fluid are added into the cavity within 5 minutes or less, preferably within 1 minute or less;
and/or
preferably wherein the mixer rod is rotated while a total amount of the fluid is added into the cavity.

**Patentansprüche**

1. Reaktor (100) für die Herstellung eines mikronisierten Silikagels, wobei der Reaktor umfasst:

einen Reaktorkörper (102) mit einem Hohlraum (104);
mindestens einen Rührstab (106), der sich im Hohlraum des Reaktorkörpers befindet und relativ zu dem Reaktorkörper über eine Rotationsaxe drehbar ist;
wobei der mindestens eine Rührstab mindestens eine Rührerweiterung (108) umfasst;
wobei der mindestens eine Rührstab und/oder die mindestens eine Rührerweiterung mindestens eine Auslass-Öffnung (110) zum Hinzufügen einer Flüssigkeit in den Reaktorkörper umfasst;
wobei die mindestens eine Auslass-Öffnung über mindestens einen Flüssigkeitsanschluss (114) mit einer oder mehr Flüssigkeitsversorgung(en) (112) flüssig verbunden ist,
**dadurch gekennzeichnet, dass** die mindestens eine Rührerweiterung ein Rührblatt (108) mit oder ohne Speiche (129) ist, wobei sich die Flüssigkeitsversorgung durch das Blatt erstreckt.

2. Reaktor nach Anspruch 1, wobei sich der Flüssigkeitsanschluss durch einen Kanal (116, 118), der sich durch den Rührstab erstreckt, vorzugsweise entlang einer Längsachse des Rührstabs, und, falls die mindestens eine Auslass-Öffnung in der Rührerweiterung ist, durch die Rührerweiterung erstreckt.

3. Reaktor nach Anspruch 1 oder 2, wobei der mindestens eine Rührstab mindestens eine Rührerweiterung pro Stab, vorzugsweise zwischen 2 und 40, mehr bevorzugt zwischen 4 und 24 umfasst.

4. Reaktor nach einem der vorangehenden Ansprüche,

wobei der Reaktorhohlraum ein Volumen von mindestens 50 l, vorzugsweise mindestens 500 l, mehr bevorzugt mindestens 1000 l hat,
und/oder
wobei die mindestens eine Rührerweiterung eine Länge von mindestens 0,1 m, vorzugsweise mindestens 0,5 m aufweist.

5. Reaktor nach einem der vorangehenden Ansprüche, wenn abhängig von Anspruch 2, wobei der Kanal eine Querschnittsfläche von mindestens 3 mm$^2$, vorzugsweise mindestens 20 mm$^2$, mehr bevorzugt 50 mm$^2$ aufweist.

6. Reaktor nach einem der vorangehenden Ansprüche, wobei der Reaktorkörper eine Einlass-Öffnung (122) zum Einführen von Material in den Reaktorkörper aufweist.

7. Reaktor nach einem der vorangehenden Ansprüche, wobei der Reaktor eine Einheit (134) für das Einstellen einer Temperatur im Hohlraum des Reaktorkörpers oder einer Temperatur eines Materials, das im Hohlraum des Reaktorkörpers zur Verfügung gestellt wird, aufweist;
wobei vorzugsweise die Einheit ein Dampfheizsystem ist, das konfiguriert ist, Dampf in den Hohlraum des Reaktorkörpers einzuspritzen.

8. Reaktor nach einem der vorangehenden Ansprüche, wobei die mindestens eine Auslass-Öffnung eine Düse umfasst,
und/oder
wobei die Flüssigkeitsversorgung mindestens ein aktives oder passives Ventil umfasst, um den Fluss zu kontrollieren, Rückfluss zu verhindern und/oder die Öffnungen zu schließen.

9. Reaktor nach einem der vorangehenden Ansprüche, wobei der Reaktorkörper und/oder der mindestens eine Rührstab und/oder die mindestens eine Rührerweiterung aus nicht-reaktivem Material gemacht sind, vorzugsweise Metall, noch mehr bevorzugt rostfreiem Stahl;
und/oder
wobei der Reaktor innenseitig mit einem nicht-reaktivem Material beschichtet ist, vorzugsweise Gummi, Plastik, Emaille oder Verbundmaterialien daraus.

10. Reaktor nach einem der vorangehenden Ansprüche, der des Weiteren eine Antriebseinheit (136) für das Drehen des mindestens einen Rührstabs umfasst;
wobei vorzugsweise die Antriebseinheit konfiguriert ist, die mindestens eine Rührstange mit 1-200 UpM, mehr bevorzugt 1-120 UpM, noch mehr bevorzugt mit 1-60 UpM zu drehen.

11. Verwendung eines Reaktors nach einem der vorangehenden Ansprüche für die Herstellung eines mikronisierten Silikagels.

12. Verfahren zur Herstellung eines mikronisierten Silikagels mit dem Reaktor nach einem der Ansprüche 1 bis 10, wobei das Verfahren die Schritte umfasst:

(a) Bereitstellen von Kieselsol in den Hohlraum des Reaktorkörpers;
(b) Drehen des mindestens einen Rührstabs relativ zum Reaktorkörper;
(c) Einspritzen einer Flüssigkeit, vorzugsweise einer flüchtigen Säure und/oder flüchtigen Base, mehr bevorzugt einer wässrigen Ameisensäurelösung und/oder einer wässrigen Ammoniumhydrogencarbonatlösung, in den Hohlraum des Reaktorkörpers;

wobei die Schritte (c) und (b) zumindest teilweise gleichzeitig durchgeführt werden.

13. Verfahren nach Anspruch 12,

wobei der Reaktor eine Einheit nach Anspruch 8 umfasst;
wobei das Verfahren des Weiteren den Schritt umfasst:
(d) Einstellen einer Temperatur des Kieselsols innerhalb des Hohlraums des Reaktors auf eine Temperatur im Bereich von 20°C bis 100°C, vorzugsweise von 40°C bis 90°C, noch mehr bevorzugt von 50°C bis 80°C;
wobei Schritt (d) nach Schritt (a) und vor Schritt (c) durchgeführt wird,
vorzugsweise wobei zwischen 1% und 50% pro Gewicht der Flüssigkeit innerhalb 5 Minuten oder weniger, vorzugsweise innerhalb einer Minute oder weniger in den Hohlraum hinzugefügt werden;
und/oder

vorzugsweise wobei der Rührstab gedreht wird, während eine Gesamtmenge der Flüssigkeit in den Hohlraum hinzugefügt wird.

## Revendications

1. Réacteur (100) pour la production d'un gel de silice micronisée, le réacteur comprenant :

un corps de réacteur (102) avec une cavité (104) ;
au moins un barreau mélangeur (106) à l'intérieur de la cavité du corps de réacteur et pouvant tourner par rapport au corps de réacteur autour d'un axe de rotation ;
l'au moins un barreau mélangeur comprenant au moins une extension de mélange (108) ;
l'au moins un barreau mélangeur et/ou l'au moins une extension de mélange comprenant au moins un orifice de sortie (110) pour ajouter un fluide dans le corps de réacteur ;
l'au moins un orifice de sortie étant relié fluidiquement à une ou plusieurs alimentations en fluide (112) via au moins une connexion pour fluide (114),
**caractérisé en ce que** l'au moins une extension de mélange et une pale (108) avec ou sans rayon (120), l'alimentation en fluide s'étendant à travers la pale.

2. Réacteur selon la revendication 1, la connexion pour fluide s'étendant à travers un canal (116, 118) qui s'étend à travers le barreau mélangeur, préférablement le long d'un axe longitudinal du barreau mélangeur, et, si l'au moins un orifice de sortie est dans l'extension de mélange, à travers l'extension de mélange.

3. Réacteur selon la revendication 1 ou 2, l'au moins un barreau mélangeur comprenant au moins une extension de mélange par barreau, préférablement entre 2 et 40, plus préférablement entre 4 et 24.

4. Réacteur selon l'une quelconque des revendications précédentes,

la cavité de réacteur ayant un volume d'au moins 50 L, préférablement d'au moins 500 L, plus préférablement d'au moins 1 000 L,
et/ou
l'au moins une extension de mélange ayant une longueur d'au moins 0,1 m, préférablement d'au moins 0,5 m.

5. Réacteur selon l'une quelconque des revendications précédentes lorsqu'elle est dépendante de la revendication 2, le canal ayant une surface de section transversale d'au moins 3 mm², préférablement d'au moins 20 mm², plus préférablement de 50 mm².

**6.** Réacteur selon l'une quelconque des revendications précédentes, le corps de réacteur ayant une entrée (122) pour insérer une matière dans le corps de réacteur.

**7.** Réacteur selon l'une quelconque des revendications précédentes, le réacteur ayant une unité (134) pour régler une température à l'intérieur de la cavité du corps de réacteur ou une température d'une matière fournie à l'intérieur de la cavité du corps de réacteur ; préférablement, l'unité étant un système de chauffage de vapeur qui est configuré pour injecter de la vapeur dans la cavité du corps de réacteur.

**8.** Réacteur selon l'une quelconque des revendications précédentes, l'au moins une sortie comprenant une buse,
et/ou
la connexion pour fluide comprenant au moins une soupape active ou passive pour réguler l'écoulement, empêcher un refoulement et/ou fermer les ouvertures.

**9.** Réacteur selon l'une quelconque des revendications précédentes, le corps de réacteur et/ou l'au moins un barreau mélangeur et/ou l'au moins une extension de mélange étant fait(e) (s) d'une matière non réactive, préférablement un métal, encore plus préférablement de l'acier inoxydable ; et/ou
le réacteur étant recouvert à l'intérieur avec un matériau non réactif, préférablement du caoutchouc, des matières plastique, de l'émail ou des composites correspondants.

**10.** Réacteur selon l'une quelconque des revendications précédentes, comprenant en outre une unité d'entraînement (136) pour la rotation de l'au moins un barreau mélangeur ;
préférablement, l'unité d'entraînement étant configurée pour faire tourner l'au moins un barreau mélangeur avec 1 à 200 tr/min, plus préférablement avec 1 à 120 tr/min, encore plus préférablement avec 1 à 60 tr/min.

**11.** Utilisation d'un réacteur selon l'une quelconque des revendications précédentes pour la production d'un gel de silice micronisée.

**12.** Procédé pour la production d'un gel de silice micronisée avec le réacteur selon l'une quelconque des revendications 1 à 10, le procédé comprenant les étapes de :

(a) fourniture d'un sol de silice dans la cavité du corps de réacteur ;

(b) rotation de l'au moins un barreau mélangeur par rapport au corps de réacteur ;
(c) injection d'un fluide, préférablement un acide volatil et/ou une base volatile, plus préférablement une solution aqueuse d'acide formique et/ou une solution aqueuse d'hydrogénocarbonate d'ammonium, dans la cavité du corps de réacteur ;

les étapes (c) et (b) étant réalisées au moins partiellement simultanément.

**13.** Procédé selon la revendication 12,

le réacteur comprenant une unité selon la revendication 8 ;
le procédé comprenant en outre l'étape de :
(d) réglage d'une température du sol de silice à l'intérieur de la cavité du réacteur jusqu'à une température dans la plage de 20 °C à 100 °C, préférablement de 40 °C à 90 °C, encore plus préférablement de 50 °C à 80 °C ;
l'étape (d) étant réalisée après l'étape (a) et avant l'étape (c),
préférablement, entre 1 % et 50 % par poids du fluide étant ajouté dans la cavité en 5 minutes ou moins, préférablement en 1 minute ou moins ;
et/ou
préférablement, le barreau mélangeur étant mis en rotation tandis qu'une quantité totale du fluide est ajoutée dans la cavité.

Figure 1

Figure 2

Figure 3

Figure 4

**EP 3 868 464 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 097378 A1
- DE 19530339 A1
- US 2819002 A
- EP 0272380 A2
- US 2759798 A
- US 3501269 A
- DD 261586 A1
- DD 279233 A1
- EP 2486975 A1
- DE 102006022685 B4